# EUROPÄISCHE PATENTSCHRIFT

(11) **EP 1 161 302 B1**
(45) Veröffentlichungstag und Bekanntmachung des Hinweises auf die Patenterteilung: **18.02.2004**
(21) Anmeldenummer: 99973740.6
(22) Anmeldetag: 19.05.1999
(51) Int. Cl.: B03B 11/00, B03B 13/00, B03B 5/28

(54) **ANLAGE UND VERFAHREN ZUR TRENNUNG VON STOFFGEMISCHEN UNTERSCHIEDLICHER DICHTE**
INSTALLATION AND METHOD FOR SEPARATING SUBSTANCE MIXTURES HAVING DIFFERENT DENSITIES
INSTALLATION ET DISPOSITIF POUR DIVISER DES MELANGES DE MATIERES DE DIFFERENTES DENSITES

(30) Priorität: 04.03.1999 DE 19909510
(43) Veröffentlichungstag der Anmeldung: 12.12.2001
(73) Patentinhaber: Behnsen, Silke, 60528 Frankfurt am Main (DE)
(72) Erfinder: BEHNSEN, Peter, D-60528 Frankfurt am Main (DE)
(74) Vertreter: Lippich, Wolfgang, Dipl.-Phys, Dr.rer.nat.
(86) Internationale Anmeldenummer: PCT/EP1999/003441
(87) Internationale Veröffentlichungsnummer: WO 2000/051741

(56) Entgegenhaltungen:
- EP-A- 0 557 816
- WO-A-93/19850
- DE-A- 4 209 277
- DE-A- 19 750 983
- US-A- 1 686 435
- US-A- 2 877 896
- US-A- 2 957 577
- US-A- 4 470 901
- US-A- 4 483 768
- US-A- 5 057 211

## Beschreibung

Die Menge an Abfallstoffen aller Art wird durch die Zunahme der Bevölkerung immer größer. Die Aufbereitung in Deponien hat einen großen Flächenbedarf. Eine Lage in der Nähe von Ortschaften verursacht Belästigungen durch Ammoniak-Dämpfe und gefährdet die Gesundheit der Bewohner durch sich verbreitende Pilze und Sporen. Die Müllverbrennung zur Beseitigung von Abfallstoffen verursacht CO₂ als Abgas, und es entstehen Schlacken, die deponiert werden müssen. Sofern Abfallstoffe aus Kunststoffen verbrannt werden, können neben CO₂ toxisch wirkende Gase .entstehen, welche die Atmosphäre belasten. Sofern solche Abfallstoffe aussortiert und deponiert werden, bilden die aussortierten Volumina eine Umweltbelastung, oder sie sind instabil und werden langsam biologisch zersetzt. Dies gilt insbesondere für Verpackungsmaterial aus Kunststoffen mit anhaftenden Nahrungsmittelresten.

Im Stand der Technik hat man zahlreiche Versuche unternommen, Kunststoff-Stoffgemische zum Zwecke der Recyclierung zu trennen.

Aus der DE 28 27 335 A1 ist beispielsweise eine trichterförmige Trennvorrichtung mit zentralem Rührwerk zur Trennung von auf bis zu 200°C erhitzten Kunststoffpartikeln bekannt. Probleme bei dieser Vorrichtung scheinen darin zu liegen, daß eine turbulente Strömung gegen Absetzbleche im mittleren Teil des Trichters erzeugt wird und daß Erhitzen des Brennmediums zu Änderungen der Dichten der Kunststoffe führt. Insbesondere bei mehrschichtigen Kunststoffgegenständen ist der erreichbare Trennungsgrad kaum ausreichend.

Aus der DD 256 049 A3 ist ein Verfahren zur Aufbereitung von "Plastmüll" bekannt. Bei diesem Verfahren wird ebenfalls eine trichterförmige Trennvorrichtung verwendet, welche im oberen Bereich der Aufgabe des zu trennenden Materials Ablenkbleche aufweist. Auch bei dieser Vorrichtung ist der Reinheitsgrad der getrennten Fraktionen kaum ausreichend.

Aus der FR 25 73 340 ist ein Verfahren zur Aufbereitung von Plastikmaterial nach Abtrennung von Papier mit einem Intensivrührer bekannt. Es sollen Kunststoffpartikel in einem zylinderischen Rohr mit einer Verengung unterhalb des Einleitungsrohres durch Erzeugung einer Zone mit reduzierter Fließgeschwindigkeit in eine leichte, aufschwimmende und in eine schwere, absinkende Fraktion getrennt werden. Bei einer anderen konstruktiven Ausbildung soll in, mit den breiten Oberseiten aufeinander stehenden Trichtern eine Trennung erfolgen. Diese soll dadurch bewirkt werden, daß der Trennraum parallele senkrechte Trennwände aufweist, die röhrenförmige Trennflächen darstellen. Auf der kreisförmigen Trennlinie der beiden Trichtern soll sich ein kleines Volumen einer Beruhigungszone ausbilden. Diese Zone wird in waagerechter Richtung von dem ein- und austretenden Trennmedium durchströmt. Diese Vorrichtung gestattet nur die Trennung von Kunststoffen, die aufgrund ihrer chemischen Zusammensetzung größere Dichtedifferenzen aufweisen. Die erzielbare Sortenreinheit ist kaum ausreichend. Auch die Durchsatzkapazität ist bei dieser Vorrichtung gering.

Die Veröffentlichung Kunststoffe, 74/1984, Seite 189, rechte Spalte, Zeile 9 - 13 von unten bestätigt, daß sich solche Trennanlagen im Schwimm- und Sink-Verfahren nach dem Stand der Technik im praktischen Dauereinsatz als zu störanfällig erwiesen haben.

Aus der DE 42 09 277 A1 ist ein Trennaggregat mit einem exzentrisch in einem zylinderischen Rohr angeordneten Rührer bekannt. Durch eine Abschlußplatte mit kanalförmigen, zum Rohr senkrecht gerichteten Austrittsöffnungen soll eine plötzliche Verminderung der Strömungsgeschwindigkeit bewirkt werden. Aber auch mit dieser im Schwimm- und Sink-Verfahren arbeitenden Vorrichtung ist eine ausreichend sortenreine Trennung mit ausreichendem Durchsatz kaum erzielbar.

Aus Ullmanns Enzyklopädie der Technik, 4. Auflage, Band 2, Verfahrenstechnik I, 1972, Seite 77 ist ein Aufstromklassierer bekannt, welcher mit einem beweglichen Schwanenhals zur Veränderung der Betthöhe ausgerüstet ist. Der Klassierer ist so ausgebildet, daß der freie Zulauf über einen umgestülpten Trichter ausströmt und beim Ausströmen über diesen oben geschlossenen Behälter die Strömungsrichtung nach oben und nach unten ändert. Der Klassierer dient der Abtrennung von Schlamm aus Kaolin. Es soll hiermit eine Feinfraktion von einer Grobfraktion getrennt werden, nicht jedoch Fraktionen unterschiedlicher Dichte. Nur die Betthöhe, nicht aber die Austrittsmenge wird durch den Schwanenhals gesteuert.

Aus der EP 0 557 816 A2, nach der die Oberbegriffe der unabhängigen Patentansprüche gebildet wurden, ist eine Anlage zur Trennung von Stoffgemischen unterschiedlicher Dichte mittels eines flüssigen Trennmediums durch Aufsteigen leichter und Absinken schwerer Fraktionen bekannt, welche folgendes umfaßt: Einen Einrührbehälter zur Herstellung einer Mischung des Stoffgemisches und des Trennmediums; wenigstens einen Trennbehälter; ein im mittleren Bereich des Trennbehälters angeordnetes Trennaggregat, durch das die Mischung in den Trennbehälter eingeleitet wird, wobei das Trennaggregat aus zwei sich gegenüberstehenden Kegeln, nämlich einem oberem und einem unteren Kegel aufgebaut ist, wobei die Mischung zentrisch durch einen der Kegel eintritt; Austrittsleitungen oben und unten am Trennbehälter; und wenigstens eine Einrichtung zum Befreien der auf diese Weise getrennten Fraktionen von dem Trennmedium. Dieser Vorschlag ist im technischen Maßstab nicht über ein Versuchsstadium herausgekommen. Es hat sich in der Praxis gezeigt, daß sich hiermit keine ausreichende Stofftrennung bei akzeptablem Durchsatz erzielen läßt.

Der Erfindung liegt die Aufgabe zugrunde, Anlagen und Verfahren zur Trennung von Stoffgemischen unterschiedlicher Dichte bereitzustellen, durch die mit geringem Aufwand Verbesserungen hinsichtlich Sortenreinheit und Durchsatz erzielt werden.

Diese Aufgabe wird gemäß einem ersten Aspekt der Erfindung gelöst durch eine Anlage gemäß dem Oberbegriff des Anspruchs 1, die dadurch gekennzeichnet ist, daß im Trennbehälter ein erstes und ein zweites Leitblech vorgesehen sind, welche horizontal angeordnet sind, die Kegel zwischen sich aufnehmen und einen seitlich nach außen gerichteten Strömungsraum für die austretende Mischung bilden. Überraschenderweise hat sich gezeigt, daß die kennzeichnende Maßnahme eine erhebliche Verbesserung hinsichtlich der Sortenreinheit der Trennung erzielen läßt.

Gemäß einem anderen Aspekt der Erfindung wird die Aufgabe gelöst durch eine Anlage gemäß dem Oberbegriff von Anspruch 2, welche durch eine Einrichtung zur selektiven Steuerung der durch die untere Austrittsleitung pro Zeiteinheit entnommene Menge der Mischung von Schwerfraktionen und Trennmedium gekennzeichnet ist. Unter "selektiver Steuerung" wird hierbei eine solche verstanden, welche die unten entnommene Austrittsmenge direkt beeinflußt, also eine gesteuerte Veränderung des Verhältnisses von oben zu unten entnommener Menge bewirkt.

Bei der in der EP 0 557 816 offenbarten Anlage ist keine derartige selektive Steuerung vorgesehen. Zwar dürfte sich dort eine Veränderung der in den Trennbehälter eingeführten Menge auch auf die unten entnommene Menge auswirken, eine selektive Steuerung gemäß der Erfindung, welche eine Änderung des Verhältnisses dieser Menge zur eingeführten Menge - und damit auch zur oben entnommenen Menge - erlaubt, ist dort jedoch nicht vorgesehen. Eine derartige selektive Steuerung wirkt sich vorteilhaft hinsichtlich der Prozeßführung aus und erlaubt daher eine Erhöhung der Sortenreinheit bei hohen Durchsätzen.

Es sei angemerkt, daß die untere Austrittsleitung keineswegs an der tiefsten Stelle des Trennbehälters angesetzt sein braucht. Sie kann vielmehr auch an einer etwas erhöhten Stelle beispielsweise seitlich am Trennbehälter ansetzen. In letzterem Fall werden besonders schwere Anteile nicht durch die Austrittsleitung ausgetragen, sondern sinken zum tiefsten Punkt des Trennbehälters. Dort kann eine gesonderte Austragseinrichtung für diese besonders schweren Teile vorgesehen sein.

Vorzugsweise ist die Einrichtung zur selektiven Steuerung eine aktive Fördereinrichtung, insbesondere eine mit einem Antrieb versehene Pumpe. Hierzu zählen u. a. auch mit Antrieb versehene Schneckenförderer etc. (Anspruch 3).

Vorzugsweise ist diese aktive Fördereinrichtung so ausgebildet, daß sie die selektive Steuerung der entnommenen Menge ohne Querschnittsvariation der Austrittsleitung, allein durch Variation des Fördervolumens pro Zeiteinheit bewirkt. Hierbei kann es sich beispielsweise um eine Druckkolbenpumpe handeln, insbesondere eine Drehkolbenpumpe, wie sie beispielsweise zur Förderung von Beton verwendet wird. Eine solche Drehkolbenpumpe kann beispielsweise so ausgebildet sein, daß der Rotor eine eingängige Schnecke ist, die in einem zweigängigen Schneckengehäuse eine exzentrische Drehbewegung ausführt. Eine derartige Pumpe kann ventillos ausgebildet sein. Auch eine Förderschnecke ist geeignet. Die Steuerung der entnommenen Menge erfolgt durch Variation des Fördervolumens pro Zeiteinheit durch entsprechende Änderung der Drehzahl der Pumpe bzw. Schnecke (Anspruch 4).

Alternativ kann die Einrichtung zur selektiven Steuerung der entnommenen Menge auch passiv durch Ausnutzung der Schwerkraft ausgebildet sein, indem beispielsweise die untere Austrittsleitung als flexibler Schlauch gebildet ist, der zur Steuerung der Austrittsmenge ohne Querschnittsvariation heb- und senkbar angeordnet ist (Anspruch 5).

Am oberen Ende des Trennbehälters ist vorteilhaft eine Überlaufeinrichtung angeordnet, an welche die obere Austrittsleistung anschließt (Anspruch 6). Durch die selektive Steuerung der unten entnommenen Menge wird die Höhe des Flüssigkeitsspiegels im Trennbehälter - und damit indirekt die oben über die Überlaufeinrichtung überlaufende Menge - gesteuert.

Grundsätzlich kann die Überlauföffnung eine konstante Querschnittsfläche aufweisen. Vorteilhaft ist sie jedoch mit einer Einrichtung zur Verstellung ihres Querschnitts ausgerüstet (Anspruch 7). Bei feinerem Kunststoffgranulat kann nämlich eine relativ kleine Überlauföffnungsfläche erwünscht sein, um im oberen Bereich des Trennbehälters eine relativ große Strömung hervorzurufen, was sich günstig im Hinblick auf eine Vermeidung von Materialanhaftungen an der inneren Trennbehälterwand auswirkt. Falls in der Mischung jedoch größere Teile, etwa Folienstücke enthalten sind, ist es zur Vermeidung von Verstopfungen vorteilhaft, die Anlage mit einer größeren Überlauf-Querschnittsfläche zu fahren.

Zur Prozeßsteuerung sind vorteilhaft wenigstens eine Einrichtung zur Ermittlung der in den Trennbehälter pro Zeiteinheit eingeführten Menge sowie eine Einrichtung zur Ermittlung der unten aus dem Trennbehälter pro Zeiteinheit entnommenen Menge vorgesehen (Anspruch 8). Bei diesen Einrichtungen kann es sich um unabhängig arbeitende Strömungs- oder Durchflußsensoren handeln, welche eine teilweise oder völlige Verstopfung in der Zuleitung in den Trennbehälter bzw. in der unteren Austrittsleitung direkt detektieren. Es ist aber auch möglich, aus der Drehzahl der jeweiligen Förderpumpe auf den Durchfluß zu schließen. Letztere Art der Ermittlung kann ausreichend sein, wenn sich im Fall einer Verstopfung die Drehzahl der betroffenen Pumpe entsprechend verringert. Die ermittelten Mengen dienen der Steuerung der unten entnommenen Menge - und damit indirekt auch der oben entnommenen Menge. Darüber hinaus kann der ermittelte Wert der in den Trennbehälter eingeführten Menge auch der Steuerung der Förderpumpe dienen, welche für die Überführung der Mischung vom Einrührbehälter in den Trennbehälter zuständig ist.

Als zusätzliche Maßnahme zur Vermeidung bzw. Beseitigung etwaiger Verstopfungen kann vorteilhaft eine Einrichtung zur Einleitung von Druckpulsen in die untere Austrittsleitung vorgesehen sein (Anspruch 9). Insbesondere handelt es sich hierbei um Druckluftpulse.

Um bereits vor dem Trennbehälter Schwergutverunreinigungen (z. B. Metallteile) abzuscheiden, verläßt die Mischung den Einrührbehälter vorzugsweise seitlich (Anspruch 10). Metallteile, die im Einrührbehälter aufgrund ihrer großen Dichte nach unten sinken, werden hierdurch nicht in den Trennbehälter gefördert.

Um gleichmäßige Verhältnisse bei der Herstellung der Mischung zu gewährleisten, weist die Anlage vorzugsweise eine Einrichtung zur Ermittlung und Konstanthaltung des Füllungsgrads im Einrührbehälter auf (Anspruch 11). Ferner ist es von Vorteil, wenn der Einrührbehälter ein Rührwerk aufweist, dessen Drehzahl konstant geregelt wird (Anspruch 12). Um eine Wirbelbildung im Trennbehälter zu vermeiden, kann das Trennaggregat zwischen den horizontalen Leitblechen vorteilhaft mit senkrechten Beruhigungsblechen ausgerüstet sein (Anspruch 13). Eine entsprechende Funktion kann aber beispielsweise auch durch radiale Rippen, die innen an der Wandung des Trennbehälters angeordnet sind, erzielt werden. Bei Folienmaterial wird eher von senkrechten Beruhigungsblechen abgesehen, um Verstopfungen am Austritt aus dem Trennaggregat zu vermeiden.

Hinsichtlich der Verfahrensansprüche (Ansprüche 14-26) wird auf die obigen Ausführungen zu den verschiedenen Aspekten und Ausgestaltungen der Anlage verwiesen.

Die Erfindung wird nun anhand von Ausführungsbeispielen sowie der Zeichnung näher erläutert. In der Zeichnung zeigen:
- Fig. 1: einen Trennbehälter im Querschnitt;
- Fig. 2: eine Seitenansicht des Trennbehälters von Fig. 1 mit einem flexiblen Schlauch zur Steuerung der unten entnommenen Menge;
- Fig. 3: einen Einrührbehälter im Querschnitt;
- Fig. 4: eine schematische Darstellung einer Anlage zur Trennung von Stoffgemischen; und
- Fig. 5: eine Ansicht einer anderen Ausführungsform mit Einrühr- und Trennbehälter, bei der die Entnahme aus dem Trennbehälter durch eine Pumpe erfolgt.

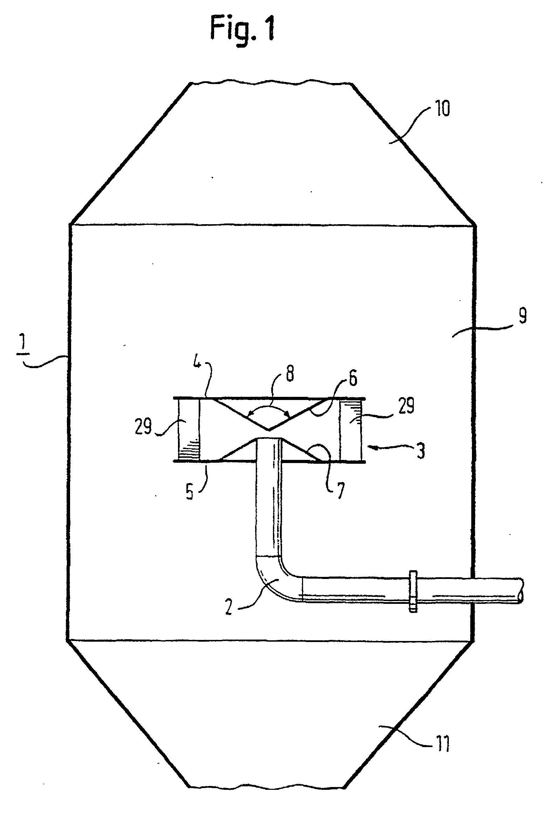

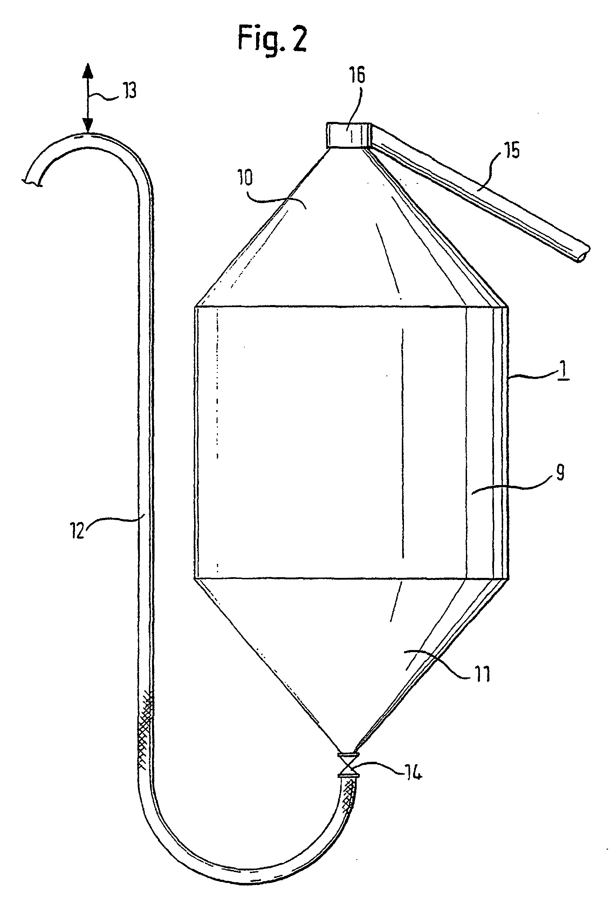

Der Trennbehälter 1 gemäß Fig. 1 und 2 ist aus einem kreiszylindrischen Mittelteil 9 und einem an dessen Stirnflächen angesetzten konischen Oberteil 10 bzw. konischen Unterteil 11 aufgebaut. Der Übergang vom zylindrischen zum konischen Teil des Einrührbehälters 1 weist beispielsweise einen Winkel von 30-45° auf.

Der Mittelteil 1 hat vorzugsweise eine Breite von 1,9-2,4 m. Der Trennbehälter 1 hat insgesamt vorzugsweise eine Höhe von 4-6 m. Am Mittelpunkt des Trennbehälters 1 ist ein Trennaggregat 3 angeordnet, welches aus zwei sich mit den Spitzen gegenüberstehenden Kegeln, nämlich einem oberen Kegel 6 und einem unteren Kegel 7, die jeweils mit ihrer Basis zwischen zwei horizontalen Leitblechen, einem oberen Leitblech 4 und einem unteren Leitblech 5 eingesetzt sind, aufgebaut. Bei einem der beiden Kegel 6, 7 fehlt die Kegelspitze tatsächlich, da an ihrer Stelle eine Rohrleitung 2 mündet. Wenn also oben von "mit den Spitzen gegenüberstehend" die Rede ist, ist hiermit bei einem der beiden Kegel 6, 7 eine "gedachte" Spitze gemeint. Die Kegel 6, 7 sind in einem engen Abstand voneinander angeordnet; beispielsweise beträgt der Abstand zwischen der Spitze des einen Kegels und der Öffnungsfläche der Rohrleitung 2 1-10 cm, insbesondere zwischen 3 und 5 cm. Eine bevorzugte Anordnung ist diejenige, bei der sich die Spitzen (von denen eine "gedacht" ist) berühren.

Die Kegel 6, 7 haben einen (an der Kegelspitze gemessenen) Kegelwinkel 8 von 110-150°, vorzugsweise ungefähr 120°. Die parallel angeordneten Leitbleche 4, 5 sind rund und weisen einen Durchmesser von beispielsweise 0,7-1,1 m, vorzugsweise 0,8-1,0 m auf, reichen damit bis auf einen Abstand von beispielsweise 0,3-0,7 m, vorzugsweise 0,4-0,6 m an die Wandung des Trennbehälters 1 heran. Der Abstand zwischen den Leitblechen 4, 5 beträgt beispielsweise 0,2-0,4m, vorzugsweise ca. 0,3 m, ihr Durchmesser beträgt beispielsweise 40-60% des Innendurchmessers des Trennbehälters. Die Einleitung der Mischung in den Trennbehälter 1 erfolgt von unten oder oben durch einen der Kegel 6, 7 hindurch durch die Rohrleitung 2. Dem entsprechenden Kegel 6 bzw. 7 fehlt damit also die Kegelspitze wegen der Mündung der Rohrleitung 2 gegenüber der Spitze des anderen Kegels 7 bzw. 6. Der Ort, an dem der Mittelpunkt der Verbindungslinie der beiden Spitzen oder - bei "berührenden" Spitzen der (gedachte) Berührort liegt, ist vorzugsweise der geometrische Mittelpunkt des Trennbehälters 1, liegt also auf dessen halber Höhe auf dessen Mittellinie. Die Leitbleche 4, 5 bilden einen definierten geometrischen Raum, der eine strömungstechnische Beruhigungszone darstellt. Erst nach dem Verlassen dieses Raumes am äußeren Ende der Leitbleche 4, 5 trennt sich die Mischung endgültig in die aufsteigende Leichtfraktion und die absinkende Schwerfraktion, unterstützt durch nach oben und unten führende Teilströmungen des Trennmediums. Im Bereich zwischen den Leitblechen 4, 5 kommt es zu einer laminaren Fließströmung nach außen. Am äußeren Rand des durch die Leitbleche 4, 5 gebildeten Raumes können sich zwischen diesen mehrere symmetrisch angeordnete, senkrechte Beruhigungsbleche 29 befinden.

Durch die konstruktive Ausbildung des Trennaggregats 3 kommt es zu einer laminaren Fließströmung. Der Raum zwischen den Leitblechen 4, 5 stellt eine Ruhezone dar, in der sich eine für den Eintritt der Mischung in den Trennbehälter optimale laminare Strömung ausbildet, die nach dem Austritt eine scharfe Trennung der Fraktionen unterschiedlicher Dichte erlaubt. Wenn der Raum zwischen den Leitblechen 4, 5 zu klein gewählt wird, kann sich eine turbulente Strömung entwickeln. Falls er zu groß gewählt wird, würde keine ausreichende Führung der Mischung in einer laminaren Strömung erfolgen.

Der Durchmesser des Einleitungsrohrs 2 ist relativ groß gewählt, um die Ausbildung der laminaren Strömung im Trennaggregat 3 zu begünstigen. Ein zu geringer Durchmesser führt zu einer relativ hohen Fließgeschwindigkeit, was sich für die Ausbildung der laminaren Strömung ungünstig auswirken kann. Auch der Abstand der Kegel 6, 7 hat einen Einfluß auf die Laminarität der Strömung. Bei zu kleinem oder zu großem Abstand wird die Laminarität und damit der Trenneffekt verschlechtert.

Am unteren Ende des Trennbehälters ist eine untere Austrittsleitung 12 angesetzt, durch die die nach unten abgesunkene Schwerfraktion samt einem Teilstrom des Trennmediums ausgetragen wird. Die unten ausgetragene Menge kann selektiv gesteuert werden. Bei dem Ausführungsbeispiel gemäß Fig. 1 erfolgt diese Steuerung durch eine Ausbildung der unteren Austrittsleitung 12 als flexibler Schlauch, der nach oben bis in die Höhe des Flüssigkeitsspiegels im Trennbehälter und von dort wieder nach unten geführt ist. Mit einer am höchsten Punkt des flexiblen Schlauch ansetzenden Heb- und Senkvorrichtung 13 kann das Niveau der höchsten Stelle variiert werden. Hierdurch kann nach dem Prinzip der kommunizierenden Röhren der Flüssigkeitsspiegel im Trennbehälter 1 gehoben und gesenkt werden, wodurch - in unten näher erläuterter Weise - indirekt auch die oben entnommene Menge gesteuert wird. Mit Hilfe der selektiven Steuerung der unten entnommenen Menge wird also gesteuert, wie sich die in den Trennbehälter 1 eingeführte Menge in Teilströmungen nach oben und unten im Trennbehälter aufteilt.

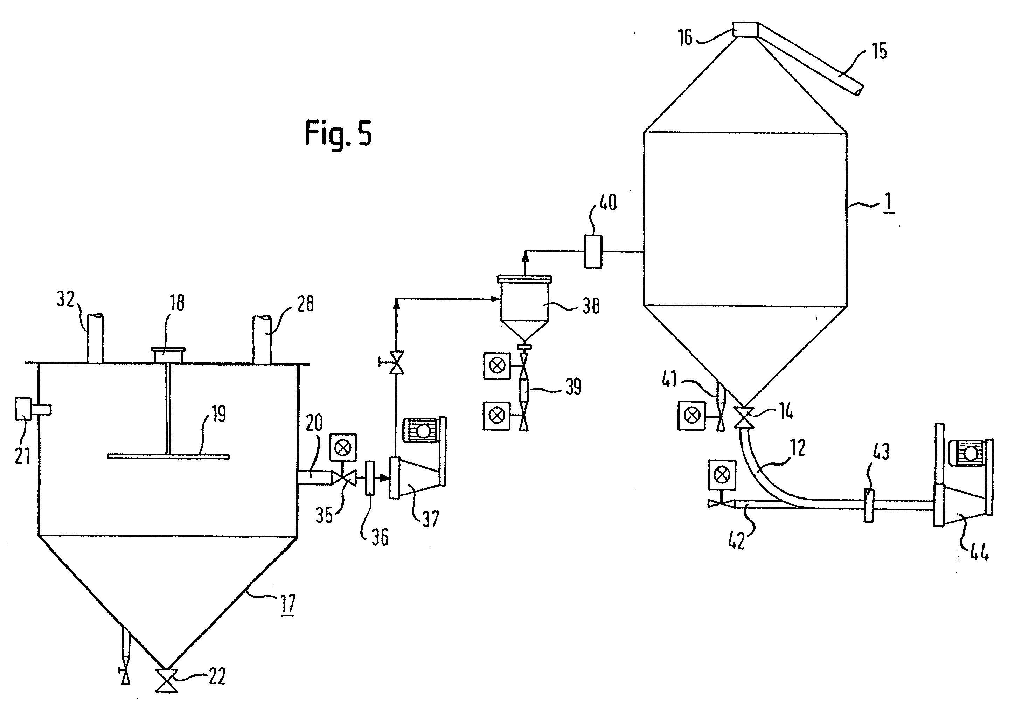

Bei dem Ausführungsbeispiel gemäß Fig. 5 erfolgt die Steuerung der unten entnommenen Menge aktiv durch eine Pumpe 44. Hierbei handelt es sich beispielsweise um eine Drehkolbenpumpe, Typ PL-300 der Firma Börger GmbH in D-16325 Borken. Die Steuerung der entnommenen Menge erfolgt durch Regelung der Pumpendrehzahl. Durch Vergrößern und Verkleinern des Volumenstroms der Pumpe 44 wird - wie beim erstgenannten Ausführungsbeispiel durch Heben und Senken des flexiblen Schlauches - der Flüssigkeitsspiegel im Trennbehälter angehoben bzw. abgesenkt, wodurch indirekt die oben entnommene Menge gesteuert wird.

Beiden Ausführungsformen ist gemeinsam, daß die Steuerung der unten entnommenen Menge ohne jegliche Querschnittsverengung der unteren Austrittsleitung 12 erfolgt. Bei der erstgenannten Ausführungsform ist dies dadurch sichergestellt, daß der flexible Schlauch nur in seiner Höhe verstellt wird, sein Querschnitt jedoch ungeändert bleibt. Bei der zweitgenannten Ausführungsform ist dies sichergestellt durch Verwendung einer Pumpe 44, die z. B. "abteilweise" fördert, wobei der Querschnitt der "Abteile" nicht kleiner als der Querschnitt der unteren Austrittsleitung 12 ist. Ein am Anfang der unteren Austrittsleitung 12 angeordnetes Ventil 14 dient nicht etwa der Steuerung der entnommenen Menge durch Querschnittsveränderung, sondern ermöglicht ein Absperren des Trennbehälters 1. Es handelt sich z. B. um einen Absperrschieber.

Sofern die Leichtfraktion und die Schwerfraktion zu ungefähr gleichen Anteilen in der Mischung vorliegen, wird die Entnahme durch die untere Austrittsleitung 12 elektronisch derart gesteuert, daß oben und unten ungefähr die gleichen Auslaufmengen aus dem Trennbehälter 1 austreten. Sofern der Anteil der Leichtfraktion deutlich höher ist, wird über den oberen Ablauf mehr Material ausgebracht als durch den unteren, was durch eine Höherverstellung des flexiblen Schlauches oder eine Verringerung der durch die Pumpe 44 geförderten Menge erfolgen kann. Bei einem höheren Anteil der Schwerfraktion wird hingegen der flexible Schlauch abgesenkt bzw. die Fördermenge der Pumpe 44 erhöht, so daß die unten ausgetragene Menge entsprechend größer als die oben ausgetragene ist. In allen Fällen erfolgt diese Steuerung ohne Querschnittsverkleinerung, so daß das Auftreten von Verstopfungen vermieden wird.

Am oberen Ende des Trennbehälters 1 befindet sich eine Überlauföffnung, die in einem Überlaufkasten 16 angeordnet ist, in dem eine obere Austrittsleitung 15 beginnt. Die obere Austrittsöffnung des Trennbehälters 1 hat eine Öffnungsquerschnittsfläche, die im Bereich zwischen 145 und 300 mm mit einem Stelltrieb verstellt werden kann. Diese Öffnung wird derart gesteuert, daß sie bei der Trennung von Folienmaterial im oberen Bereich und bei der Trennung von Granulaten im unteren Bereich liegt. Dadurch wird eine größtmögliche Strömungsgeschwindigkeit im Bereich des Überlaufs erreicht, so daß der Austrag ohne Materialanhaftung und Verstopfung erfolgen kann.

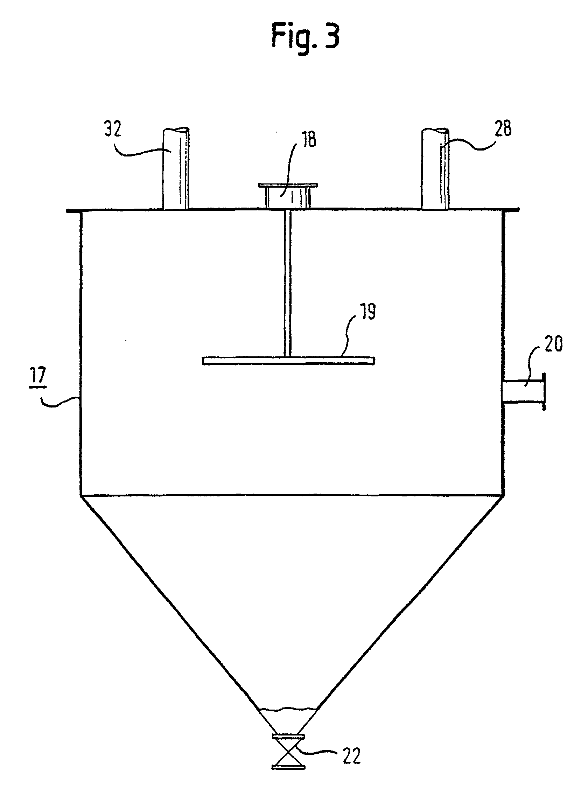

Gemäß Figur 3 weist ein oben offener Einrührbehälter mit einem Öffnungsquerschnitt von 140 - 300 mm ein Rührwerk 18 auf, welches zentrisch im mittleren oder unteren Teil des Behälters mit wenigstens einem Einrührer ausgerüstet ist, der über eine Rührwelle mit dem Rührwerk 18 verbunden ist. Bei dem Einrührer 19 handelt es sich beispielsweise um einen Rührpropeller mit Rührblättern, welche verstellbar ausgebildet sein können. Der Einrührbehälter 17 ist in seinem unteren Teil konisch ausgebildet. Etwa in mittlerer Höhe des Einrührbehälters 17, an einer Seite des zylinderischen Teils, mündet eine Austrittsverbindungsleitung 20, welche den Einrührbehälter 17 mit dem Trennbehälter 1 verbindet. Am tiefsten Punkt des konischen Teils des Einrührbehälters 17 befindet sich ein Austrittsschieber 22, durch den abgesunkenes Schwergut abgezogen werden kann. Die Eingabe des zu trennenden Stoffgemisches in den Rührbehälter 17 erfolgt über eine Rohrleitung 32. Die Eingabe des Trennmediums (es handelt sich, wie unten noch näher erläutert wird, um rückgeführtes Trennmedium) in den Rückbehälter 17 erfolgt über eine Rückführleitung 28. Das zu trennende Stoffgemisch wird anfangs in den bereits zu 4/5 mit Trennmedium gefluteten Einrührbehälter 17 eingeführt. Im laufenden Prozeß erfolgt die Einführung in einem konstanten Fluß, so daß sich im Einrührbehälter eine Konzentration von 5-20%, vorzugsweise 10-15 Gew.%, bezogen auf die flüssige Phase ergibt.

Mittels des Rührwerks 18 wird eine homogene Mischung hergestellt, wobei die Rührgeschwindigkeit so eingestellt wird, daß schwere Verunreinigungen, wie Metallteile und Fremdstoffe, in den konischen unteren Teil absinken und die homogene Mischung in laminare Strömung kontinuierlich durch die seitliche Austrittsverbindungsleitung 20 ausfließt, während Verunreinigungen durch den Austrittsschieber 22 periodisch, z. B. mit einer Periode von 0,1 - 1 h elektronisch gesteuert abgezogen werden. Das Rührwerk 18 weist eine elektronische Drehzahlregelung auf, durch welche die Drehzahl unabhängig von dem Feststoffgehalt der Mischung konstant gehalten wird. Die Drehzahl des Rührwerks wird so gewählt, daß Turbulenzen in der flüssigen Phase der Mischung vermieden werden. Weiter wird durch eine elektronische Füllstandsregelung der Füllungsgrad des Einrührbehälters elektronisch überwacht und konstant gehalten. Hierfür ist ein Füllstandssensor 21 (Figur 5) vorgesehen. Gemäß Fig. 5 sind in der Austrittsverbindungsleitung 20 zur Trennstufe ein Absperrventil 35, ein Strömungsmesser 36 und eine Pumpe 37 angeordnet. Es folgt ein Schwergutzyklon 38, aus dem über eine Schwergutschleuse 39 Schwergut abgezogen werden kann, welches im Einrührbehälter 17 nicht nach unten abgesunken ist. Es folgt schließlich ein weiterer Durchflußmesser 40, bis schließlich die Verbindungsleitung 20 in die Rohrleitung 2 übergeht, welche ins Trennaggregat 3 mündet.

Im unteren Bereich des Trennbehälters 1 ist gemäß Fig. 5 ein Ventil 41 zum Ablassen des Trennbehälterinhalts vorgesehen. Die untere Austrittsleitung 12 ist kurz nach dem Austritt aus dem Trennbehälter 1 mit einem Druckluftanschluß 42 ausgerüstet, mit dem Druckluftpulse in die Austrittsleitung 12 eingeleitet werden können. Bei anderen Ausführungsformen können statt Druckluftpulsen beispielsweise Trennmedium-Pulse eingeleitet werden. Weiter stromabwärts sind in der unteren Austrittsleitung 12 ein Durchflußmesser 43 und die nicht querschnittsverändernde Pumpe 44 angeordnet.

Die Pumpen 37 und 44 sind mit den Strömungs- und Durchflußmessern 36, 40 und 43 durch eine Steuerung derart verbunden, daß ein konstanter Mengenfluß vom Einrührbehälter 17 in den Trennbehälter 1 und in den beiden Abführleitungen 12, 15 aus dem Trennbehälter 1 geregelt wird. Insbesondere ist durch die Durchflußmessung in der Verbindungsleitung 20 und der unteren Austrittsleitung 12 indirekt bekannt, welche Menge pro Zeiteinheit durch die obere Austrittsleitung 15 abläuft. Dadurch wird auch die Aufteilung des Flusses zwischen oberen und unteren Austritt aus dem Trennbehälter 1 auf einen konstanten Wert geregelt, der in Abhängigkeit von dem Verhältnis von Leichtfraktion zu Schwerfraktion gewählt wird. Werden beispielsweise in der Verbindungsleitung 20 ein Fluß von 50 m³/h in der unteren Austrittsleitung 12 ein Fluß von 26 m³/h konstant gehalten, so wird damit der Fluß in der oberen Austrittsleitung 15 indirekt auf 24 m³/h konstant geregelt. Eine typische Flußmenge beträgt 10-25 m³/h in der unteren Austrittsleitung 12. Mit Hilfe des Durchflußmessers 43 können teilweise oder vollständige Verstopfungen in der unteren Austrittsleitung 12 detektiert werden. In einem solchen Fall veranlaßt die Steuerung der Anlage, daß über den Druckluftanschluß 42 Preßluftimpulse eingeleitet werden, um eine Verstopfung zu beseitigen. Derartige Preßimpulse können auch profilaktisch in stetiger Abfolge abgegeben werden, z. B. 5-7 Preßimpulse pro Minute. Die gewählte Strömungsgeschwindigkeit wird elektronisch derart geregelt, daß sie so groß ist, daß der Austrag der getrennten Fraktionen aus dem Trennbehälter 1 ohne Anhaften und ohne ein Ansetzen an den konischen Wänden des Trennbehälters 1 erfolgen kann.

Die Absperrventile bzw. -schieber 22, 35, 42 sind über eine elektronische Steuerung pneumatisch betätigbar. Bei einer Außerbetriebsetzung der Anlage werden die durch die Steuerung automatisch geschlossen bzw. bei einer Inbetriebnahme automatisch geöffnet.

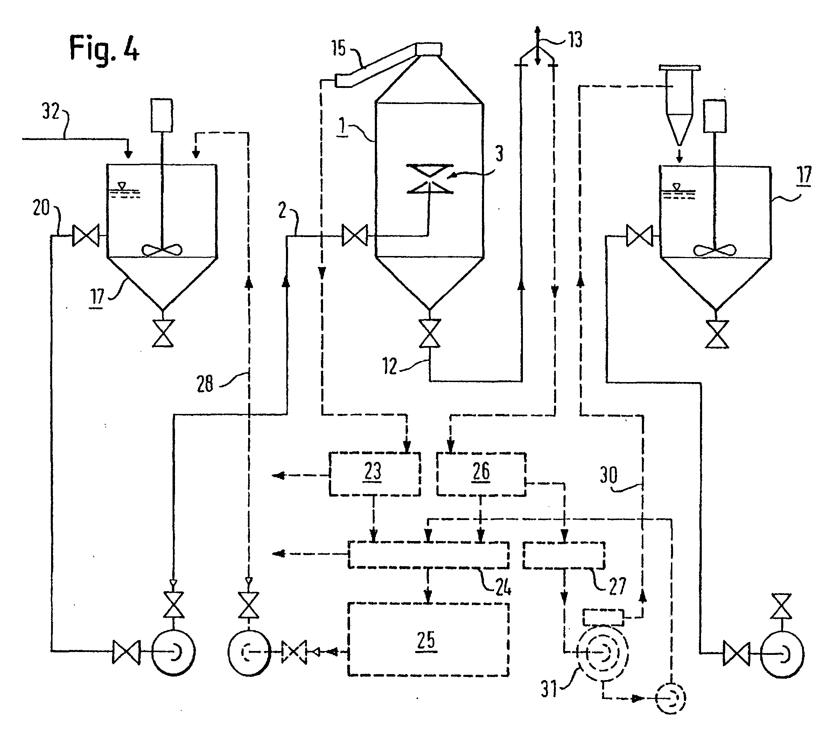

Eine komplette Anlage und das Gesamtverfahren werden nun durch das folgende Beispiel und Figur 4 näher erläutert.

In den Einrührbehälter 17 wird das auf etwa 10-30 mm zerkleinertes Kunststoffmahlgutgemisch aus Kunststoffgranulaten und/oder -folien, Provenienz "Grüner Punkt", durch das Einleitungsrohr 32 eingeleitet und mit durch die Rückführleitung 28 eingeleiteten Wasser als Trennmedium mit dem Einrührer 19 in einer Konzentration von etwa 10 % kg Kunststoff/kg Trennmedium homogenisiert. Die homogene Mischung wird kontinuierlich mit einem Durchsatz von beispielsweise 1 - 1,2 t/h über die Austrittsverbindungsleitung 20 und die Rohrleitung 2 in den bereits mit Trennmedium gefluteten Trennbehälter 1 eingeleitet. In dem Trennaggregat 3 beginnt in der dortigen laminaren Strömung durch die Leitbleche 5 und 6 die Trennung der Schwer- und Leichtfraktion. Beim Austreten aus dem Raum zwischen den Leitblechen 5 und 6 erfolgt die weitere Stofftrennung in eine aufsteigende Fraktion mit geringerer Dichte und eine absinkende Fraktion mit größerer Dichte als das Trennmedium. Nach dem Austrag aus dem Trennbehälter 1 durch die obere und untere Austrittsleitung 15 bzw. 12 werden diese Fraktionen auf Sieben 23 und 26 und über Filter 24 und 27 von dem in flüssiger Phase vorliegenden Trennmittel (z.B. Wasser) getrennt. Gegebenenfalls erfolgt auch eine weitere Entwässerung mit einer Zentrifuge 31. Abgetrenntes Trennmedium wird in ein Pufferbecken 25 geleitet und von dort über die Rückführleitung 28 in den Einrührbehälter 17 zurückgeführt.

Zur weiteren Trennung der Leicht- und/oder Schwerfraktion können diese Fraktionen anschließend weitere Trennstufen durchlaufen, die wiederum im wesentlichen aus Einrührbehälter und Trennbehälter aufgebaut sind. Der wesentliche Unterschied dieser folgenden Trennstufen besteht darin, daß bei ihnen das Trennmedium schwerer bzw. leichter als dasjenige der vorhergehenden Stufe ist.

Mit Wasser als Trennmedium werden beispielsweise folgende Fraktionen getrennt:

| Fraktion | Bezeichnung | % | Dichte (g/cm³) |
|---|---|---|---|
| Leichtfraktion | PO | 60 | 0,96 - 0,98 |
| Schwerfraktion | PS | 10 | 1,06 |
| Restfraktionen | | 30 | 1,10 und höher |
| (sinken zusammen mit Schwerfraktion PS ab und können in weiteren Stufen von dieser abgetrennt werden) | | | |

Die Restfraktionen können in entsprechender Weise in einer folgenden Stufe mit einer MgSO₄-Lösung als Trennmedium getrennt werden.

Zusammengefaßt betreffen die Ausführungsbeispiele Verfahren zur kontinuierlichen und verstopfungsfreien Trennung von Stoffgemischen unterschiedlicher Dichten, insbesondere aus Kunststoffmahlgut aus Granulaten oder Folien mittels eines Trennmediums durch Einführen des zerkleinerten Materials in einen Rührbehälter zur Homogenisierung mit dem Trennmedium, Abpumpen in einen Trennbehälter mit einem Trennaggregat und Austreten der getrennten Fraktionen und Rückführung des Trennmediums. Genauer weist das beispielhaft dargestellte Verfahren folgende Verfahrensschritte auf:
1) Einführen des zu trennenden, zerkleinerten Stoffgemisches über das Einleitungsrohr 32 in das durch die Rückführleitung 28 getrennt eingeleitete flüssige Trennmedium in den unten konischen, bereits gefluteten Einrührbehälter 17 in konstanter Menge pro Zeiteinheit, so daß eine Konzentration von 10-20, vozugsweise von 10-15 Gewichtsprozent, auf die flüssige Phase gerechnet, erzielt wird, Vermischen zu einer homogenen Mischung mittels des Rührwerks 18 mit einer Rührwelle mit ein oder mehreren Einrührern 19, wie z.B. Rührpropeller mit verstellbaren Rührblättern, wobei die Rührgeschwindigkeit so eingestellt wird, daß Verunreinigungen, wie aus Metallen und Fremdstoffen, in den konischen, unteren Teil absinken und die homogene Mischung in laminarer Strömung kontinuierlich seitlich, etwa in der Mitte durch die Austrittsverbindungsleitung 20 ausfließt und Verunreinigungen durch einen Austrittsschieber 22 periodisch abgezogen werden,
2) Eintreten des homogenen Stoffgemisches in den Trennbehälter 1, der aus dem zylindrischen Teil 9 und dem oberen und unteren konischen Teil 10, 11 gebildet ist, durch die Rohrleitung 2 dicht oberhalb des unteren konischen Teils 10, die in der Mitte des zylindrischen Teils 9 senkrecht nach unten gebogen ausgebildet ist, aus dieser frei austretend in das Trennaggregat 3 eintritt, das einen geometrischen Raum bildet und aus einem oberen und einem unteren runden oder kreisförmigen Trennblech 4, 5 gebildet ist, auf denen obere und untere Kegel 6, 7 mit einem Abstand angeordnet sind, mit einem Kegelwinkel 8 von z.B. 100-130°, vorzugsweise von 120°, und die Kegel mit den Spitzen im oben erläuterten Sinn eng gegenüber stehen, zum Bewirken turbulenzfreier Führung des homogenen Gemisches im flüssigen Trennmedium, wodurch das in den gefluteten Trennbehälter 1 ohne Verwirbelung eintretende homogene Stoffgemisch mit einer laminaren Fließgeschwindigkeit einen Trennschnitt der Komponenten mit unterschiedlicher Dichte bewirkt und erst am Ende der Trennbleche 4, 5, welche fakultativ mit mehreren senkrechten Beruhigungsblechen 29 ausgerüstet sind, die Stoffpartikel einer zerkleinerten Korngröße von 10-50 mm, vorzugsweise von 20-30 mm aufsteigen oder absinken in die konischen Teile 10, 11 des Trennbehälters 1 und dadurch die Stofftrennung in eine oder mehrere schwere Fraktionen bewirkt wird, und eine Steuerung der flüssigen Phase mit den getrennten Fraktionen durch das geöffnete Ventil 14 mittels eines flexiblen Schlauches 12 erfolgen kann, der z.B. durch einen Flaschenzug 13 oder einen Spindelantrieb höhenverstellbar ist, derart, daß die obere Krümmung des Schlauches 12 als kommunizierende Röhre die gleiche Höhe mit dem Flüssigkeitsspiegel in dem Trennbehälter 1 einstellt, oder, alternativ, mittels einer Pumpe 44, deren Fördermenge z.B. durch Drehzahlverstellung ohne Querschnittsveränderung variierbar ist, so daß die leichte Fraktion am oberen konischen Teil 10 durch das Ableitungsrohr 15 mit dem darin angeordneten Überlaufkasten 16 austritt und die schwere Fraktion im unteren konischen Teil 11 des Trennbehälters 1 austritt, und die getrennten Fraktionen durch Siebentwässerung 23, 26 und über Filter 24, 27 von der flüssigen Phase abgetrennt werden und diese in ein Pufferbecken 25 fließt und aus diesem das flüssige Trennmedium über eine Rückführleitung 28 in den Einrührbehälter 17 recycliert wird, und die getrennten Fraktionen zentrifugiert und ggf. durch eine Nachtrocknung von einer Restmenge an flüssiger Phase befreit werden und danach Silos zur weiteren Verwendung zugeführt werden. Beim Stillstand der Anlage bleibt das untere Ventil 14 bis zum Wiederanfahren des Durchsatzes am Stoffgemisch geschlossen, wodurch der Trennbehälter 1 gefüllt bleibt.

Der Durchmesser der Trennbleche 4, 5 beträgt im Verhältnis zum Durchmesser des zylindrischen Teils 9 des Trennbehälters 1 0,4-0,6, vorzugsweise 0,47-0,5. Beispielsweise beträgt der Durchmesser der Trennbleche 900 mm und der Durchmesser des zylindrischen Teils 9 1900 mm.

Die Abflußrichtung und die Menge des flüssigen Trennmediums am oberen Ablauf 15 und/oder am unteren Austritt 14 wird durch Einstellung einer variablen Höhe des flexiblen Schlauches 12 oder Steuerung der Fördermenge der Pumpe 44 durch Änderung der Höhe des kommunizierenden Flüssigkeitsspiegels im Trennbehälter 1 bewirkt. Die Durchmesser der oberen und unteren Austrittsleitung 15, 12 sind gleich, sie betragen vorzugsweise 100 mm. Der Durchmesser der Eintrittsrohrleitung 2 beträgt das Ein- bis Zweifache der Austrittsleitungen 12, 15.

Als Trennmedium kann z.B. Wasser oder in Wasser gelöste anorganische Salze, wie NaCl, KCl, MgSO₄ mit einer Einstellung unterschiedlicher Dichten zwischen 1,1 und 1,4 g/cm³ oder aus Wasser und mit Wasser mischbaren organischen Flüssigkeiten, wie Isopropylalkohol mit 0,80-0,98 g/cm³ dienen, wobei die Dichte des flüssigen Trennmediums zwischen der Dichte der leichten und der schweren Fraktion eingestellt wird.

Nach Abtrennung der leichten Fraktion können in weiteren Trennbehältern in gleicher Weise z.B. ein oder mehrere schwere Fraktionen von der jeweils leichteren Fraktion abgetrennt und in gleicher Weise weiter behandelt werden.

Die Zerkleinerung des Stoffgemisches kann beispielsweise oder durch Mahlen zum Mahlgut erfolgen. Grundsätzlich ist es möglich, zerkleinerte Stoffgemische wie Erze, Kohle von Gangart oder Metalle, wie Aluminium von Eisen, oder nichtmischbare Flüssigkeiten mit unterschiedlicher Dichte, wie Wasser und Öle zu trennen. Vorzugsweise handelt es sich jedoch um organische Stoffgemische, beispielsweise aus PE, PS, PVC, PET mit den Dichten 0,96; 1,05; 1,30; 1,31 g/cm³, die in mehreren Stufen in Trennbehältern in Reinfraktionen getrennt werden. Die in Reinfraktion vorliegende Kunststoffe können durch Extrusion zu Granulat verarbeitet werden.

Der Trennbehälter 1 hat beispielsweise folgende Abmessungen: Gesamthöhe 4 m, Durchmesser des zylindrischen Teils 1,90 m, Höhe des zylindrischen Teils größer 2 m. Hiermit kann mit einer Durchsatzkapazität von 1-2 t/h eingeführter Kunststoffmischung eine Trennung in praktisch sortenreine Fraktionen erfolgen.

Eine beispielhafte Ausführungsform der Anlage weist einen konischen Einrührbehälter 17 mit Einleitungsrohr 28 zum Einführen des Trennmediums und Eingangsrohr 32 zum Einführen des zerkleinerten Stoffgemisches, welcher ein Rührwerk 18 mit Rührwelle und Einrührern 19, wie z.B. mit Rührpropellern mit verstellbaren Rührblättern, zur Erzeugung einer homogenen Mischung aufweist und mit einer Austrittsverbindungsleitung 20 zum Austritt der homogenen Mischung an einer Seite des zylindrischen Teils verbunden ist und am unteren Ende des konischen Teils mit einem Austrittsschieber 22 verbunden ist. Die Austrittsleitung 20 führt zu dem Trennbehälter (1), der den zylindrischen Teil 9 und den oberen und unteren konischen Teil 10, 11 umfaßt. In dem Trennbehälter 1 ist das Trennaggregat 3 angeordnet, das einen geometrischen Raum bildet, der durch die Leitbleche 4, 5 begrenzt ist, wobei auf den Leitblechen Kegel aus oberer und unterer Kegel 6, 7 im oben erläuterten Sinn in nur geringem Abstand, wie etwa 4-5 cm, sich gegenüberstehen, und wobei am äußeren Rand der Leitbleche 4, 5 fakultativ senkrechte Beruhigungsbleche 29 angeordnet sind. Durch die gebogene Rohrleitung 2 tritt die homogene Mischung von unten durch den unteren Kegel 7 zentrisch ein und strömt durch diese Bleche mit laminarer Fließgeschwindigkeit, so daß bei dem runden, vorzugsweise kreisförmigen Ende der Leitbleche 4, 5 der Trennschnitt eintritt und die spezifisch leichtere Fraktion oder Fraktionen über das Ableitungsrohr 15 mit Überlaufkasten 16 austreten und am unteren Ende die spezifisch schwerere Fraktion oder Fraktionen durch das Ventil 14 und den heb- und senkbaren flexiblen Schlauch 12 oder die mit der Pumpe 44 ausgerüstete untere Austrittsleitung 12 austritt. Das Trennaggregat 3 ist im zylindrischen Teil 9 des Trennbehälters 1 befestigt. Die getrennten Fraktionen werden zur Abtrennung des flüssigen Trennmediums auf die Siebvorrichtung 23 (leichtere Fraktion) und die Siebvorrichtung 26 (schwerere Fraktion) und danach über Filter 24 und 27 geleitet. Das Trennmedium fließt in ein Pufferbecken 25 und aus diesem über die Rückführleitung 28 zurück in den Einrührbehälter 17. Die getrennten Fraktionen werden ggf. durch eine Zentrifuge 31 und/oder eine Heizvorrichtung nachgetrocknet und danach Silos zugeführt. Gegebenenfalls werden weiter zu trennende Fraktionen in einen nachgeordneten zweiten Einrührbehälter 17 und Trennbehälter 1 eingeführt.

Auf dem kreisförmigen Rand der Leitbleche 4, 5 sind fakultativ mehrere, insbesondere 12-15 Beruhigungsbleche 29 gleichmäßig beabstandet radial angeordnet, und senkrecht zu den Blechen 4, 5 mit diesen beispielsweise verschweißt. Der Durchmesser des Trennaggregats 3 beträgt beispielsweise 900 mm, derjenige der Kegel 6, 7 beispielsweise 500 mm, der an der Spitze gemessene Kegelwinkel beträgt z.B. ungefähr 120°, der Abstand der Kegel 6, 7 (im oben erläuterten Sinn), vorzugsweise 4 cm, der Abstand der parallelen Leitbleche 4, 5 ungefähr 300 mm, der Durchmesser der Rohrleitung 2 beispielsweise 110 mm, und die Breite der Beruhigungsbleche 29 beispielsweise 100 mm bei einem Randabstand von ungefähr 20 mm.

Die Trennung der Fraktionen verschiedener Dichte im flüssigen Trennmedium erfolgt im Trennaggregat 3, welches durch die parallelen, rund, kreisförmig oder eckig gestalteten Flächen 4, 5 in einem nach den Seiten offenen definierten Raum gebildet ist, wobei auf den Flächen 4, 5 im Innenraum die sich gegenüberstehenden kegelförmigen Körper 6, 7 mit ihrer Basis angeordnet sind, was zur Einstellung der Fließrichtung der flüssigen Phase dient. Zwischen den Flächen sind mehrere senkrechte, radiale symmetrisch angeordnete Führungselemente befestigt, welche zur Führung der laminaren Strömung dienen. Beim Austritt an den Enden der parallelen Flächen wird der Trennschnitt bewirkt, wodurch die spezifisch leichtere Fraktion oder Fraktionen ausströmen und die spezifisch schwerere Fraktion oder Fraktionen absinken, und diese an den oberen und unteren Austrittsöffnungen austreten. Das Trennmedium wird abgetrennt und recycliert, die Fraktionen vom Restwasser befreit und den Silos-zugeführt.

Mit dem erfindungsgemäßen Verfahren können Stoffgemische mit Schwankungen im Feststoffgehalt von etwa 5-50% Feststoff, bezogen auf die homogene Mischung mit dem Trennmedium getrennt werden. Das Verfahren hat durch seine Trennschärfe eine große Anwendungsbreite für die Trennung von anorganischen oder organischen Stoffgemischen aus Kunststoffen in Form von Granulaten und Folien als Mahlgut, von Produktionsabfällen aus der Industrie, vorzugsweise aus der chemischen Industrie und aus der Abfallwirtschaft, die Trennung von Teppichböden, Fasern, Autoteilen für ein Recycling der getrennten Stoffe als Wertstoffe. Dem Verfahren kommt damit eine erhebliche volkswirtschaftliche Bedeutung zu. Das Verfahren hat durch die Rückgewinnung von Stoffen eine hohe Wirtschaftlichkeit bei geringem Einsatz von Betriebsmitteln. Es führt zu keiner Umweltbelastung aus gasförmigen, flüssigen oder festen Abfallstoffen. Das flüssige Trennmedium wird im Kreislauf geführt. Sofern wäßrige Lösungen daraus abzuführen sind, enthalten diese im allgemeinen keine toxisch wirkenden Verbindungen, sondern hauptsächlich Salze. Die Erfindung erlaubt eine verringerung der durch Deponierung oder Verbrennung zu beseitigende Abfallstoffe.

Zum Abschluß werden noch eine Bezugszeichenliste sowie verschiedene Begriffsdefinitionen angegeben. Es bedeuten in den Figuren die Ziffern:
- 1: Trennbehälter
- 2: Rohrleitung
- 3: Trennaggregat
- 4: oberes Leitblech
- 5: unteres Leitblech
- 6: oberer Kegel
- 7: unterer Kegel
- 8: Kegelwinkel
- 9: zylindrischer Teil des Trennbehälters
- 10: oberer konischer Teil des Trennbehälters
- 11: unterer konischer Teil des Trennbehälters
- 12: untere Austrittsleitung (in Fig. 1 flexible Schlauchverbindung)
- 13: Heb- und Senkvorrichtung
- 14: pneumatisches, elektronisch gesteuertes Auslaßventil
- 15: Ableitungsrohr
- 16: Überlaufkasten
- 17: teilweise konischer Einrührbehälter
- 18: Rührwerk
- 19: Einrührer
- 20: Austritts-Verbindungsleitung zum Trennbehälter
- 21: Füllstandssensor
- 22: pneumatisches, elektronisch gesteuertes Auslaßventil oder Austrittsschieber für Fremdgut
- 23: Siebentwässerung Oberlauf
- 24: Filter
- 25: Pufferbecken
- 26: Siebentwässerung Unterlauf
- 27: Filter
- 28: Rückführleitung Trennmedium
- 29: Beruhigungsbleche
- 30: Leitung zur nächsten Trennstufe
- 31: Zentrifuge
- 32: Rohrleitung
- 35: Absperrventil
- 36: Strömungsmesser
- 37: Pumpe
- 38: Schwergutzyklon
- 39: Schwergutschleuse
- 40: Durchflußmesser
- 41: Ablaßventil
- 42: Druckluftanschluß
- 43: Durchflußmesser
- 44: Pumpe

Es werden unter den Begriffen verstanden:
flüssiges Trennmedium oder flüssige Phase: Die Flüssigkeit, deren Dichte zwischen den Dichten der zu trennenden Stoffe liegt;
Fraktion: Diese bezeichnet die abgetrennten Stoffe mit verschiedener Dichte;
Reinfraktion: bezeichnet abgetrennte Stoffe gleicher chemischer Zusammensetzung;
Partikel: bezeichnen Stoffteile als Granulat oder als Mahlgut.

## Patentansprüche

1. Anlage zur Trennung von Stoffgemischen mit Bestandteilen unterschiedlicher Dichte mittels eines flüssigen Trennmediums durch Aufsteigen leichter und Absinken schwerer Fraktionen, mit:
- einem Einrührbehälter (17) zur Herstellung einer Mischung des Stoffgemisches und des Trennmediums,
- wenigstens einem Trennbehälter (1),
- einem im mittleren Bereich des Trennbehälters (1) angeordneten Trennaggregat (3), durch das die Mischung in den Trennbehälter (1) eingeleitet wird, wobei das Trennaggregat (3) aus zwei sich gegenüberstehenden Kegeln, nämlich einem oberen und einem unteren Kegel (6, 7) aufgebaut ist, wobei die Mischung zentrisch durch einen der Kegel (6, 7) eintritt,
- Austrittsleitungen (12, 15) oben und unten am Trennbehälter (1),
- wenigstens einer Einrichtung zum Befreien der auf diese Weise getrennten Fraktionen von dem Trennmedium,
**dadurch gekennzeichnet, daß**
im Trennbehälter (1) ein erstes und ein zweites Leitblech (4, 5) vorgesehen sind, welche horizontal angeordnet sind, die Kegel (6, 7) zwischen sich aufnehmen und einen seitlich nach außen gerichteten Strömungsraum für die austretende Mischung bilden.

2. Anlage zur Trennung von Stoffgemischen mit Bestandteilen unterschiedlicher Dichte mittels eines flüssigen Trennmediums durch Aufsteigen leichter und Absinken schwerer Fraktionen nach Anspruch 1 mit:
- einem Einrührbehälter (17) zur Herstellung einer Mischung des Stoffgemisches und des Trennmediums,
- wenigstens einem Trennbehälter (1),
- einem im Trennbehälter (1) angeordneten Trennaggregat (3), durch das die Mischung in den Trennbehälter (1) eingeleitet wird,
- Austrittsleitungen (12, 15) oben und unten am Trennbehälter (1) zum Entnehmen von Mischungen von Leichtfraktionen und Trennmedium bzw. von Schwerfraktionen und Trennmedium,
- wenigstens einer Einrichtung zum Befreien dieser Mischungen von dem Trennmedium,
**gekennzeichnet, durch**
eine Einrichtung zur selektiven Steuerung der **durch** die untere Austrittsleitung (12) pro Zeiteinheit entnommenen Menge der Mischung von Schwerfraktionen und Trennmedium.

3. Anlage nach Anspruch 2, bei welcher die Einrichtung zur selektiven Steuerung der durch die untere Austrittsleitung (12) entnommenen Menge eine aktive Fördereinrichtung, insbesondere eine Pumpe ist.

4. Anlage nach Anspruch 3, bei welcher die aktive Fördereinrichtung so ausgebildet ist, daß sie die selektive Steuerung der durch die untere Austrittsleitung (12) entnommenen Menge ohne Querschnittsvariation durch Variation des Fördervolumens pro Zeitheit bewirkt.

5. Anlage nach Anspruch 2, bei welcher die Einrichtung zur selektiven Steuerung durch eine Ausgestaltung der unteren Austrittsleitung (12) als flexibler Schlauch gebildet ist, der zur passiven Steuerung der Austrittsmenge ohne Querschnittsvariation heb- und senkbar angeordnet ist.

6. Anlage nach einem der Ansprüche 1 bis 5, bei welcher am oberen Ende des Trennbehälters (1) eine Überlaufeinrichtung (16) angeordnet ist, an welche die obere Austrittsleitung (15) anschließt.

7. Anlage nach Anspruch 6, welche eine Einrichtung zur Verstellung des Querschnitts einer Überlauföffnung der Überlaufeinrichtung (16) aufweist.

8. Anlage nach einem der Ansprüche 2 bis 7, welche außerdem folgendes aufweist:
- wenigstens eine Einrichtung zur Ermittlung der in den Trennbehälter (1) pro Zeiteinheit eingeführten Menge,
- wenigstens eine Einrichtung zur Ermittlung der unten aus dem Trennbehälter (1) pro Zeiteinheit entnommenen Menge,
wobei die Einrichtung zur selektiven Steuerung die unten pro Zeiteinheit entnommene Menge in Abhängigkeit von den ermittelten Werten der in den Trennbehälter (1) eingeführten Menge und der unten aus ihm entnommenen Menge gesteuert wird.

9. Anlage nach einem der Ansprüche 1 bis 8, welche eine Einrichtung zur Einleitung von Druckpulsen, insbesondere Druckluftpulsen, in die untere Austrittsleitung (12) umfaßt.

10. Anlage nach einem der Ansprüche 1 bis 9, bei welcher eine Leitung zur Überführung der im Einrührbehälter (17) hergestellten Mischung in den Trennbehälter (1) seitlich in den Einrührbehälter (17) mündet.

11. Anlage nach einem der Ansprüche 1 bis 10, welche eine Einrichtung zur Ermittlung und Konstanthaltung des Füllungsgrads des Einrührhälters (17) umfaßt.

12. Anlage nach einem der Ansprüche 1 bis 11, bei welcher der Einrührbehälter (17) ein Rührwerk aufweist, dessen Drehzahl konstant gehalten wird.

13. Anlage nach einem der Ansprüche 1 oder der auf Anspruch 1 rückbezogenen Ansprüche 2 bis 12, bei welcher zwischen den horizontalen Leitblechen (4, 5) mehrere senkrechte Beruhigungsbleche (29) angeordnet sind.

14. Verfahren zur Trennung von Stoffgemischen mit Bestandteilen unterschiedlicher Dichte mittels eines flüssigen Trennmediums durch Aufsteigen leichter und Absinken schwerer Fraktionen, mit folgenden Schritten:
- Herstellen einer Mischung des Stoffgemisches und des Trennmediums durch Einrühren des Stoffgemisches in das Trennmedium in einem Einrührbehälter (17),
- Einleiten der Mischung in einen Trennbehälter (1) über ein Trennaggregat (3), welches aus zwei sich gegenüberstehenden Kegeln, nämlich einem oberen und einem unteren Kegel (6, 7) aufgebaut ist, wobei die Mischung zentrisch durch einen der Kegel (6, 7) eintritt,
- Entnehmen der leichteren Fraktionen des Stoffgemisches samt Trennmedium oben am Trennbehälter (1) über eine obere Austrittsleitung (15) und der schwereren Fraktionen unten am Trennbehälter (1) über eine untere Austrittsleitung (12),
- Befreien der auf diese Weise getrennten Fraktionen von dem Trennmedium,
**dadurch gekennzeichnet, daß**
die Mischung nach dem Einführen in den Trennbehälter (1) zwischen einem ersten und einem zweiten horizontalen Leitblech, welche die Kegel (6, 7) zwischen sich aufnehmen, seitlich nach außen strömt.

15. Verfahren zur Trennung von Stoffgemischen mit Bestandteilen unterschiedlicher Dichte mittels eines flüssigen Trennmediums durch Aufsteigen leichter und Absinken schwerer Fraktionen nach Anspruch 14 mit folgenden Schritten:
- Herstellen einer Mischung des Stoffgemisches und des Trennmediums durch Einrühren des Stoffgemisches in das Trennmedium in einem Einrührbehälter (17),
- Einleiten der Mischung in einen Trennbehälter (1) über ein Trennaggregat (3),
- Entnehmen der leichteren Fraktionen des Stoffgemisches samt Trennmedium oben am Trennbehälter (1) über eine obere Austrittsleitung (15) und der schwereren Fraktionen unten am Trennbehälter (1) über eine untere Austrittsleitung (12),
- Befreien der auf diese Weise getrennten Fraktionen von dem Trennmedium,
**dadurch gekennzeichnet, daß**
die durch die untere Austrittsleitung (12) pro Zeiteinheit entnommene Menge der Mischung von Schwerfraktionen und Trennmedium selektiv gesteuert wird.

16. Verfahren nach Anspruch 15, bei die selektiv gesteuerte Entnahme der Mischung von Schwerfraktionen und Trennmedium durch eine aktive Fördereinrichtung erfolgt.

17. Verfahren nach Anspruch 16, bei welchem die selektive Steuerung der durch die untere Austrittsleitung (12) entnommenen Menge ohne Querschnittsvariation durch Variation des Fördervolumens pro Zeiteinheit bewirkt wird.

18. Verfahren nach Anspruch 15, bei welchem die Steuerung der unten am Trennbehälter (1) entnommenen Menge durch Heben und Senken eines die untere Austrittsleitung (12) bildenden, flexiblen Schlauchs erfolgt.

19. Verfahren nach einem der Ansprüche 15 bis 18, bei welchem mit der Steuerung der unten am Trennbehälter (1) entnommenen Menge auch der Flüssigkeitsspiegel im Trennbehälter (1) eingestellt wird, so daß hierdurch auch die oben am Trennbehälter (1) über eine dort angeordnete Überlaufeinrichtung (16) ablaufende Menge beeinflußt wird.

20. Verfahren nach Anspruch 19, bei welchem die Querschnittsfläche einer oberen Überlauföffnung in Abhängigkeit von der Größe der festen Bestandteile der überlaufenden Mischung aus Leichtfraktionen und Trennmittel verstellt wird.

21. Verfahren nach einem der Ansprüche 15 bis 20, bei welchem
- die in den Trennbehälter (1) pro Zeiteinheit eingeführte Menge ermittelt wird,
- die unten aus dem Trennbehälter (1) pro Zeiteinheit entnommenen Menge ermittelt wird,
- die unten pro Zeiteinheit entnommene Menge in Abhängigkeit von diesen ermittelten Werten gesteuert wird.

22. Verfahren nach einem der Ansprüche 14 bis 21, bei welchem zur Vorbeugung oder Beseitigung von Verstopfungen Druckpulse, insbesondere Druckluftpulse in die untere Austrittsleitung (12) eingeführt werden.

23. Verfahren nach einem der Ansprüche 14 bis 22, bei welchem die Mischung seitlich aus dem Einrührbehälter (17) entnommen wird, so daß im Einrührbehälter (17) nach unten sinkende Teile nicht in den Trennbehälter (1) überführt werden.

24. Verfahren nach einem der Ansprüche 14 bis 23, bei welchem der Füllungsgrad des Einrührbehälters (17) gemessen und durch eine Regelung konstant gehalten wird.

25. Verfahren nach einem der Ansprüche 14 bis 24, bei welchem das Einrühren mit Hilfe eines Rührwerks erfolgt, dessen Drehzahl gemessen und durch eine Regelung konstant gehalten wird.

26. Verfahren nach einem der Ansprüche 14 bis 25, bei welchem die Ausströmung der Mischung aus dem Raum zwischen den horizontalen Leitblechen (4, 5) in den Trennbehälter (1) durch mehrere senkrechte Beruhigungsbleche (29) erfolgt.

## Claims

1. Plant for the separation of compositions having constituents of different densities by means of a liquid separating medium as a result of light fractions rising and heavy fractions sinking, comprising:
- a mixing tank (17) for producing a mixture of the composition and of the separating medium,
- at least one separation tank (1),
- a separation unit (3) disposed in the mid-region of the separation tank (1), through which the mixture is introduced into the tank (1), the separation unit (4) being constructed of two oppositely placed cones, namely an upper and a lower cone (6, 7), the mixture entering centrally through one of the cones (6, 7),
- outlet lines (12, 15) at the top and bottom of the separation tank (1),
- at least one device for freeing the fractions separated in this manner from the separating medium,
**characterised in that** in the separation tank (1) are provided a first and a second guide plate (4, 5), which are disposed horizontally, between them contain the cones (6, 7) and form a flow chamber directed laterally outward for the emerging mixture.

2. Plant for the separation of compositions having constituents of different densities by means of a liquid separating medium as a result of light fractions rising and heavy fractions sinking in accordance with Claim 1, comprising:
- a mixing tank (17) for producing a mixture of the composition and of the separating medium,
- at least one separation tank (1),
- a separation unit (3) disposed in the separation tank (1), through which the mixture is introduced into the separation tank (1),
- outlet lines (12, 15) at the top and bottom of the separation tank (1) for the removal of mixtures of light fractions and separating medium and respectively of heavy fractions and separating medium,
- at least one device for freeing these mixtures from the separating medium,
**characterised by** a device for the selective control of the quantity of the mixture of heavy fractions and separating medium which is removed through the bottom outlet line (12) per unit of time.

3. Plant according to Claim 2, in which the device for the selective control of the quantity removed through the bottom outlet line (12) is an effective delivery device, in particular a pump.

4. Plant according to Claim 3, in which the effective delivery device is constructed so that it performs the selective control of the quantity removed through the bottom outlet line (12) without variation in cross section and does so by varying the displacement per unit of time.

5. Plant according to Claim 2, in which the device for the selective control is formed by an embodiment of the bottom outlet line (12) as a flexible hose, which is arranged to be raised or lowered for the passive control of the outlet quantity without any change in cross section.

6. Plant according to one of Claims 1 to 5, in which an overflow device (16) is disposed at the top end of the separation tank (1), to which overflow device the top outlet line (15) is connected.

7. Plant according to Claim 6, which comprises a device for adjusting the cross section of an overflow aperture of the overflow device (16).

8. Plant according to one of Claims 2 to 7, which also comprises the following:
- at least one device for determining the quantity introduced into the separation tank (1) per unit of time,
- at least one device for determining the amount removed from the bottom of the separation tank (1) per unit of time,
whereby the device for the selective control [of] the quantity removed at the bottom per unit of time is controlled as a function of the determined values of the quantity introduced into the separation tank (1) and of the quantity removed therefrom at the bottom.

9. Plant according to one of Claims 1 to 8, which comprises a device for the introduction of pressure pulses, in particular compressed air pulses, into the bottom outlet line (12).

10. Plant according to one of Claims 1 to 9, in which a line for the transfer of the mixture produced in the mixing tank (17) to the separation tank (1) discharges laterally into the mixing tank (17).

11. Plant according to one of Claims 1 to 10, which comprises a device for determining the rate of admission of the mixing tank (17) and keeping it constant.

12. Plant according to one of Claims 1 to 11, in which the mixing tank (17) comprises a stirring device whose rotational speed is kept constant.

13. Plant according to one of Claims 1 or Claims 2 to 12, which refer back to Claim 1, in which several vertical calming plates (29) are disposed between the horizontal guide plates (4, 5).

14. A process for the separation of compositions having constituents of different densities by means of a liquid separating medium as a result of light fractions rising and heavy fractions sinking, having the following steps:
- production of a mixture of the composition and the separating medium by mixing the composition into the separating medium in a mixing tank (17),
- introduction of the mixture into a separation tank (1) via a separation unit (3), which is constructed from two mutually opposite cones, namely an upper and a lower cone (6, 7), whereby the mixture enters centrally through one of the cones (6, 7),
- removal of the lighter fractions of the composition together with the separating medium at the top of the separation tank (1) via a top outlet line (15) and the heavier fractions at the bottom of the separation tank (1) via a bottom outlet line (12),
- freeing the fractions which have been separated in this manner from the separating medium,
**characterised in that** the mixture, after its introduction into the separation tank (1) between a first and a second horizontal guide plate, which contain the cones (6, 7) between them, flows laterally outwards.

15. A process for the separation of compositions having constituents of different densities by means of a liquid separating medium as a result of light fractions rising and heavy fractions sinking, in accordance with Claim 14, having the following steps:
- production of a mixture of the composition and the separating medium by mixing the composition into the separating medium in a mixing tank (17),
- introduction of the mixture into a separation tank (1) via a separation unit (3),
- removal of the lighter fractions of the composition together with the separating medium at the top of the separation tank (1) via a top outlet line (15) and removal of the heavier fractions at the bottom of the separation tank (1) via a bottom outlet line (12),
- freeing the fractions separated in this manner from the separating medium,
**characterised in that** the quantity of the mixture of heavy fractions and separating medium which is removed through the bottom outlet line (12) per unit of time is selectively controlled.

16. A process according to Claim 15, in which the selectively controlled removal of the mixture of heavy fractions and separating medium is performed by an effective delivery device.

17. A process according to Claim 16, in which the selective control of the quantity removed through the bottom outlet line (12) without cross-sectional variation is performed by varying the displacement per unit of time.

18. A process according to Claim 15, in which the control of the quantity removed from the bottom of the separation tank (1) is performed by raising and lowering a flexible hose forming the bottom outlet line (12).

19. A process according to one of Claims 15 to 18, in which the fluid level in the separation tank (1) is also set with the control of the quantity removed from the bottom of the separation tank (1), so that the quantity which flows away at the top of the separation tank (1) via an overflow device located there is influenced by this.

20. A process according to Claim 19, in which the cross-sectional area of an upper overflow opening is adjusted as a function of the size of the solid constituents of the overflowing mixture of light fractions and separating medium.

21. A process according to one of Claims 15 to 20, in which
- the quantity introduced into the separation tank (1) per unit of time is determined,
- the quantity removed from the bottom of the separation tank (1) per unit of time is determined,
- the quantity removed at the bottom per unit of time is controlled as a function of these determined values.

22. A process according to one of Claims 14 to 21, in which pressure pulses, in particular pulses of compressed air, are introduced into the bottom outlet line for the prevention or removal of obstructions.

23. A process according to one of Claims 14 to 22, in which the mixture is removed from the side of the mixing tank (17) so that parts which sink to the bottom of the mixing tank are not transferred into the separation tank (1).

24. A process according to one of Claims 14 to 23, in which the rate of admission of the mixing tank (17) is measured and is kept constant by a control.

25. A process according to one of Claims 14 to 24, in which mixing is performed by means of a stirring device, the rotational speed of which is measured and is kept constant by a control.

26. A process according to one of Claims 14 to 25, in which the emergence of the mixture from the chamber between the horizontal guide plates (4, 5) into the separation tank (1) is performed by several vertical calming plates (29).

## Revendications

1. Installation pour diviser des mélanges de matières comportant des composants de différentes densités au moyen d'un fluide séparateur liquide en faisant monter les fractions légères et descendre les fractions lourdes, dotée :
- d'un récipient de délayage (17) pour mélanger le mélange de matières et le fluide séparateur,
- d'au moins un récipient de séparation (1),
- d'un agrégat de séparation (3) disposé dans la partie médiane du récipient de séparation (1), par lequel le mélange est introduit dans le récipient de séparation (1), l'agrégat de séparation (3) étant constitué de deux cônes se faisant face, à savoir un cône supérieur et un cône inférieur (6, 7), le mélange entrant de manière centrale par l'un des cônes (6, 7),
- de conduites de sortie (12, 15) en haut et en bas du récipient de séparation (1),
- d'au moins un dispositif pour libérer les fractions séparées de cette manière du fluide séparateur,
**caractérisée en ce qu'**une première et une deuxième tôles de guidage (4, 5) disposées horizontalement sont prévues dans le récipient de séparation (1), les cônes (6, 7) se logeant entre elles, et qui forment un espace d'écoulement orienté latéralement vers l'extérieur pour le mélange produit.

2. Installation pour diviser des mélanges de matières comportant des composants de différentes densités au moyen d'un fluide séparateur liquide en faisant monter les fractions légères et descendre les fractions lourdes selon la revendication 1, dotée :
- d'un récipient de délayage (17) pour mélanger le mélange de matières et le fluide séparateur,
- d'au moins un récipient de séparation (1),
- d'un agrégat de séparation (3) disposé dans le récipient de séparation (1), par lequel le mélange est introduit dans le récipient de séparation (1),
- de conduites de sortie (12, 15) en haut et en bas du récipient de séparation (1) pour prélever des mélanges de fractions légères et de fluide séparateur ou de fractions lourdes et de fluide séparateur,
- d'au moins un dispositif pour libérer ces mélanges du fluide séparateur,
**caractérisée par** un dispositif de commande sélective de la quantité du mélange de fractions lourdes et de fluide séparateur prélevée par unité de temps par la conduite de sortie (12) inférieure.

3. Installation selon la revendication 2, dans laquelle le dispositif de commande sélective de la quantité prélevée par la conduite de sortie (12) inférieure est un dispositif de transport actif, notamment une pompe.

4. Installation selon la revendication 3, dans laquelle le dispositif de transport actif est formé de telle sorte qu'il actionne la commande sélective de la quantité prélevée par la conduite de sortie inférieure sans variation de section en variant le volume aspiré par unité de temps.

5. Installation selon la revendication 2, dans laquelle le dispositif de commande sélective est formé par la conduite de sortie (12) inférieure conçue comme un tuyau flexible, disposé de manière à pouvoir être levé et abaissé sans variation de section pour la commande passive de la quantité de sortie.

6. Installation selon l'une quelconque des revendications 1 à 5, dans laquelle un dispositif de trop-plein (16) est disposé à l'extrémité supérieure du récipient de séparation (1), auquel dispositif se raccorde la conduite de sortie supérieure (15).

7. Installation selon la revendication 6 qui présente un dispositif de réglage de la section d'une ouverture de trop-plein du dispositif de trop-plein (16).

8. Installation selon l'une quelconque des revendications 2 à 7, qui présente en outre ce qui suit :
- au moins un dispositif pour déterminer la quantité introduite par unité de temps dans le récipient de séparation (1),
- au moins un dispositif pour déterminer la quantité prélevée en bas dans le récipient de séparation (1) par unité de temps,
le dispositif de commande sélective commandant la quantité prélevée en bas par unité de temps en fonction des valeurs déterminées de la quantité introduite dans le récipient de séparation (1) et de la quantité qui y est prélevée en bas.

9. Installation selon l'une quelconque des revendications 1 à 8, qui comprend un dispositif d'introduction d'impulsions de pression, notamment d'impulsions d'air comprimé, dans la conduite de sortie inférieure (12).

10. Installation selon l'une quelconque des revendications 1 à 9, dans laquelle une conduite, pour transporter dans le récipient de séparation (1) le mélange fabriqué dans le récipient de délayage (17), débouche latéralement dans le récipient de délayage (17).

11. Installation selon l'une quelconque des revendications 1 à 10, qui comprend un dispositif pour déterminer et maintenir constant le degré de remplissage du récipient de délayage (17).

12. Installation selon l'une quelconque des revendications 1 à 11, dans laquelle le récipient de délayage (17) présente un mélangeur dont la vitesse est maintenue constante.

13. Installation selon l'une quelconque des revendications 1 ou des revendications 2 à 12 renvoyant à la revendication 1, dans laquelle plusieurs tôles de stabilisation (29) verticales sont prévues entre les tôles de guidage (4, 5) horizontales.

14. Méthode pour diviser des mélanges de matières comportant des composants de différentes densités au moyen d'un fluide séparateur liquide en faisant monter les fractions légères et descendre les fractions lourdes, selon les étapes suivantes :
- mélange du mélange de matières et du fluide séparateur en délayant le mélange de matières dans le fluide séparateur dans un récipient de délayage (17),
- introduction du mélange dans un récipient de séparation (1) à l'aide d'un agrégat de séparation (3) constitué de deux cônes se faisant face, à savoir un cône supérieur et un cône inférieur (6, 7), le mélange entrant de manière centrale par l'un des cônes (6, 7),
- prélèvement des fractions plus légères du mélange de matières avec le fluide séparateur en haut du récipient de séparation (1) à l'aide d'une conduite de sortie supérieure (15), et des fractions plus lourdes en bas du récipient de séparation (1) à l'aide d'une conduite de sortie inférieure (12),
- libération des fractions séparées de cette manière du fluide séparateur,
**caractérisée en ce que** le mélange, après avoir été introduit dans le récipient de séparation (1), s'écoule latéralement vers l'extérieur entre une première et une deuxième tôles de guidage (4, 5) horizontales, logeant les cônes (6, 7) entre elles.

15. Méthode pour diviser des mélanges de matières comportant des composants de différentes densités au moyen d'un fluide séparateur liquide en faisant monter les fractions légères et descendre les fractions lourdes selon la revendication 14, selon les étapes suivantes :
- mélange du mélange de matières et du fluide séparateur en délayant le mélange de matières dans le fluide séparateur dans un récipient de délayage (17),
- introduction du mélange dans un récipient de séparation (1) à l'aide d'un agrégat de séparation (3),
- prélèvement des fractions plus légères du mélange de matières avec le fluide séparateur en haut du récipient de séparation (1) à l'aide d'une conduite de sortie supérieure (15) et des fractions plus lourdes en bas du récipient de séparation (1) à l'aide d'une conduite de sortie inférieure (12),
- libération des fractions séparées de cette manière du fluide séparateur,
**caractérisée en ce que** la quantité du mélange de fractions lourdes et du fluide séparateur prélevée par unité de temps par la conduite de sortie inférieure (12) est commandée de manière sélective.

16. Méthode selon la revendication 15, dans laquelle le prélèvement sélectif du mélange de fractions lourdes et du fluide séparateur est réalisé par un dispositif de transport actif.

17. Méthode selon la revendication 16, dans laquelle la commande sélective de la quantité prélevée par la conduite de sortie inférieure (12) est réalisée sans variation de section en variant le volume aspiré par unité de temps.

18. Méthode selon la revendication 15, dans laquelle la commande de la quantité prélevée en bas du récipient de séparation (1) est réalisée en levant et en abaissant un tuyau flexible formant la conduite de sortie inférieure (12).

19. Méthode selon l'une quelconque des revendications 15 à 18, dans laquelle le niveau du liquide dans le récipient de séparation (1) est également réglé avec la commande de la quantité prélevée en bas du récipient de séparation (1), ce qui influence la quantité s'écoulant en haut du récipient de séparation (1) à l'aide d'un dispositif de trop-plein (16) qui y est disposé.

20. Méthode selon la revendication 19, dans laquelle la surface de section d'une ouverture de trop-plein supérieure est réglée en fonction de la taille des composants solides du mélange des fractions légères et du fluide séparateur qui s'écoule.

21. Méthode selon l'une quelconque des revendications 15 à 20, dans laquelle :
- on détermine la quantité introduite par unité de temps dans le récipient de séparation (1),
- on détermine la quantité prélevée par unité de temps en bas dans le récipient de séparation (1),
- on commande la quantité prélevée en bas par unité de temps en fonction de ces valeurs déterminées.

22. Méthode selon l'une quelconque des revendications 14 à 21, dans laquelle des impulsions de pression, notamment des impulsions d'air comprimé, sont introduites dans la conduite de sortie inférieure (12) pour prévenir ou empêcher des engorgements.

23. Méthode selon l'une quelconque des revendications 14 à 22, dans laquelle le mélange est prélevé latéralement dans le récipient de délayage (17), de sorte que les parties tombant vers le bas dans le récipient de délayage (17) ne sont pas transportées dans le récipient de séparation (1).

24. Méthode selon l'une quelconque des revendications 14 à 23, dans laquelle le degré de remplissage du récipient de délayage (17) est mesuré et maintenu constant par un réglage.

25. Méthode selon l'une quelconque des revendications 14 à 24, dans laquelle le délayage est réalisé à l'aide d'un mélangeur dont la vitesse est mesurée et maintenue constante par un réglage.

26. Méthode selon l'une quelconque des revendications 14 à 25, dans laquelle l'écoulement du mélange s'effectue en dehors de l'espace entre les tôles de guidage (4, 5) horizontales dans le récipient de séparation (1) à l'aide de plusieurs tôles de stabilisation (29) verticales.
